# EUROPEAN PATENT APPLICATION

(11) **EP 1 424 744 A1**
(43) Date of publication of application: **02.06.2004**
(21) Application number: 03021219.5
(22) Date of filing: 18.09.2003
(51) Int. Cl.: H01M 10/40, H01M 10/38, H01M 4/64, H01M 2/02, H01M 4/58

(54) **Stacked battery, assembled battery and vehicle**

(30) Priority: 10.10.2002 JP 2002297070
(71) Applicant: NISSAN MOTOR CO., LTD., Yokohama-shi Kanagawa-ken (JP)
(72) Inventor: Fukuzawa, Tatsuhiro, Yokohama-shi Kanagawa-ken (JP); Nemoto, Kouichi, Zushi-shi Kanagawa-ken (JP)
(74) Representative: Weber, Joachim, Dr.

(57) **Abstract**

A stacked battery comprises a sheet electrode including a collector, and an electrolyte layer placed between the electrodes. In the stacked battery, an electrode stacked body is formed by stacking the electrode and the electrolyte layer, and the electrodes are placed on outermost layers of the electrode stacked body in such a manner so that the collectors are exposed to the outside of the stacked battery in the stacking direction of the electrode stacked body and function as terminals.

## Description

### BACKGROUND OF THE INVENTION

### 1. Field of the Invention

The present invention relates to a stackedbattery formed by stacking sheet electrodes sandwiching an electrolyte layer therebetween, an assembled battery in which a plurality of the stacked batteries are connected, and a vehicle mounting the stacked battery or the assembled battery.

### 2. Description of the Related Art

In recent years, there has been a strong demand for carbon dioxide emission reduction for environmental protection. In the automobile industry, it is hoped that carbon dioxide emission reduction can be achieved by the introduction of electric vehicles (EV) and hybrid electric vehicles (HEV), and painstaking efforts are being made on the development of a secondary battery for driving a motor, which holds the key to putting these vehicles into practical use . A stackedbattery, which can attain high energy and power densities, has attracted attention as this secondary battery.

In the stacked battery, sheet electrodes are electrically connected in series while sandwiching an electrolyte layer therebetween within a battery package. Since a current flows in the stacking direction of the electrodes, that is, battery thickness direction, a conducting path has a wide area, thereby making it possible to obtain a high power.

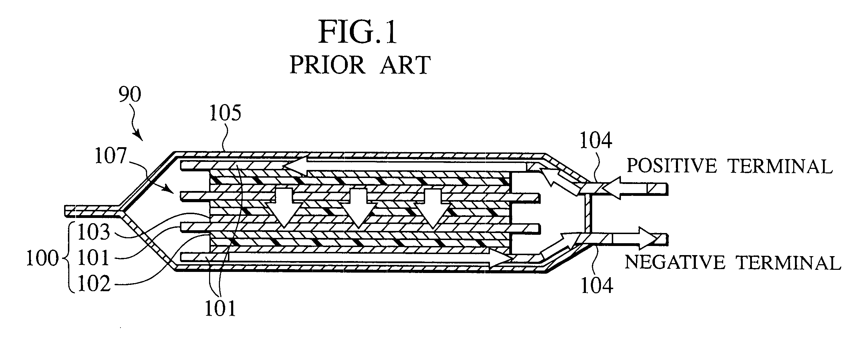

In this type of conventional stacked battery, for example, in a bipolar secondary battery 90 shown in FIG. 1, an electrode 100 includes a collector 101, a positive electrode active material layer 102 and a negative electrode active material layer 103. An electrode stacked body 7 is formed by stacking the electrode 100 which sandwiches an electrolyte layer therebetween. The collectors 101 are placed on the both ends of the electrode stacked body 7, and connected to tabs (terminals) 104, respectively. These collectors 101 are drawn out of a battery package 105 (refer to Japanese Patent Application Laid-Open No. 2002-75455).

### SUMMARY OF THE INVENTION

However, in the above bipolar battery 90, a current flows in the longitudinal direction of each tab 104 when the current is drawn outside the battery package 105, as shown by arrows in FIG. 1. In addition, although a current flows in the stacking direction of the electrodes 100 in the middle of the stack, the current flows in the longitudinal direction of the collector 101 in the collectors 101 at the both ends of the electrode stacked body 7.

This reduces power due to resistance corresponding to the current flow through the tabs 104 and the collectors 101 at both ends of the electrode stacked body 7, thus degrading efficiency and causing unnecessary heat generation.

The present invention was made in consideration of the above-described problems. An object of the present invention is to provide a stacked battery, an assembled battery formed by combining the stacked batteries, and a vehicle mounting the stacked battery or the assembled battery. In this stacked battery, tabs for drawing a current outside the battery are not used so that power reduction due to the current passing through the tabs can be prevented.

The first aspect of the present invention provides a stacked battery, comprising: a sheet electrode including a collector; and an electrolyte layer placed between the electrodes, wherein an electrode stacked body is formed by stacking the electrode and the electrolyte layer, and the electrodes are placed on outermost layers of the electrode stacked body in such a manner so that the collectors are exposed to the outside of the stacked battery in the stacking direction of the electrode stacked body and function as terminals.

The second aspect of the present invention provides an assembled battery, comprising: a stacked battery having a sheet electrode including a collector, and an electrolyte layer placed between the electrodes, wherein an electrode stacked body is formed by stacking the electrode and the electrolyte layer, the electrodes are placed on outermost layers of the electrode stacked body in such a manner so that the collectors are exposed to the outside of the stacked battery in the stacking direction of the electrode stacked body and function as terminals, and the stacked battery is connected in series.

The third aspect of the present invention provides an assembled battery, comprising: a stacked battery having a sheet electrode including a collector, and an electrolyte layer placed between the electrodes, wherein an electrode stacked body is formed by stacking the electrode and the electrolyte layer, the electrodes are placed on outermost layers of the electrode stacked body in such a manner so that the collectors are exposed to the outside of the stackedbattery in the stacking direction of the electrode stacked body and function as terminals, and a plurality of the stacked batteries are connected in parallel so that the stacked batteries are placed between two collecting plates, and a terminal functioning as the positive electrode of the stacked battery is connected to one of the collecting plates and a terminal functioning as the negative electrode of the same is connected to the other collecting plate.

The fourth aspect of the present invention provides a vehicle, comprising: a stacked battery having a sheet electrode including a collector, and an electrolyte layer placed between the electrodes, wherein an electrode stacked body is formed by stacking the electrode and the electrolyte layer, the electrodes are placed on outermost layers of the electrode stacked body in such a manner so that the collectors are exposed to the outside of the stacked battery in the stacking direction of the electrode stacked body and function as terminals.

### BRIEF DESCRIPTION OF THE DRAWINGS

The invention will now be described with reference to the accompanying drawings wherein;
FIG. 1 is a cross-sectional view illustrating a flow direction of current passing through a bipolar secondary battery according to the conventional technology;
FIG. 2 is a cross-sectional view illustrating an electrode of a bipolar battery;
FIG. 3 is a cross-sectional view illustrating a structure of which the electrodes are laminated with electrolyte layers;
FIG. 4 is a cross-sectional view illustrating a structure of the bipolar battery according to the present invention;
FIG. 5 is a plan view illustrating the bipolar battery according to the present invention;
FIG. 6 is a cross-sectional view illustrating a flow direction of current passing through the bipolar battery according to the present invention;
FIG. 7 is a cross-sectional view illustrating an assembled batteryformed byinterconnectingthe bipolar battery of the present invention in series;
FIG. 8 is a cross-sectional view illustrating an assembled batteryformed byinterconnectingthe bipolar battery of the present invention in parallel; and

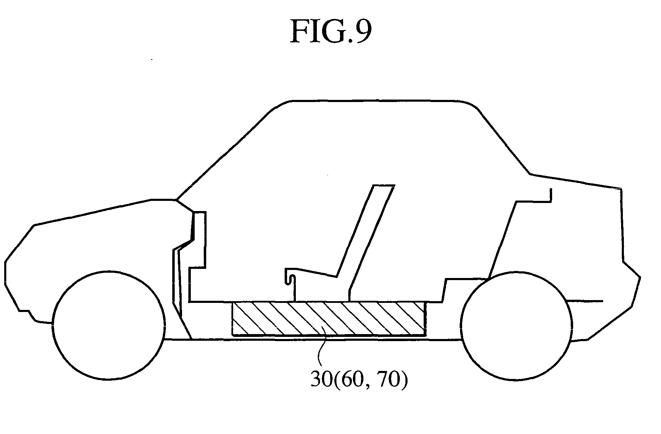

FIG. 9 is a cross-sectional view illustrating a vehicle mounting the bipolar battery or the assembled battery according to the present invention.

### DETAILED DESCRIPTION OF THE PREFERRED EMBODIMENT

Hereinafter, description will be made of embodiments of the present invention with reference to the drawings.

### (First Embodiment)

A first embodiment of the present invention is a stacked battery formed by stacking sheet electrodes which sandwich an electrolyte layer therebetween. In this stacked battery, the electrodes are stacked on outermost layers of an electrode stacked body so that collectors included in these electrodes are exposed outside the battery in the stacking direction of the electrodes and function as terminals. In this embodiment, description will be provided regarding a case where the stacked battery is a bipolar battery.

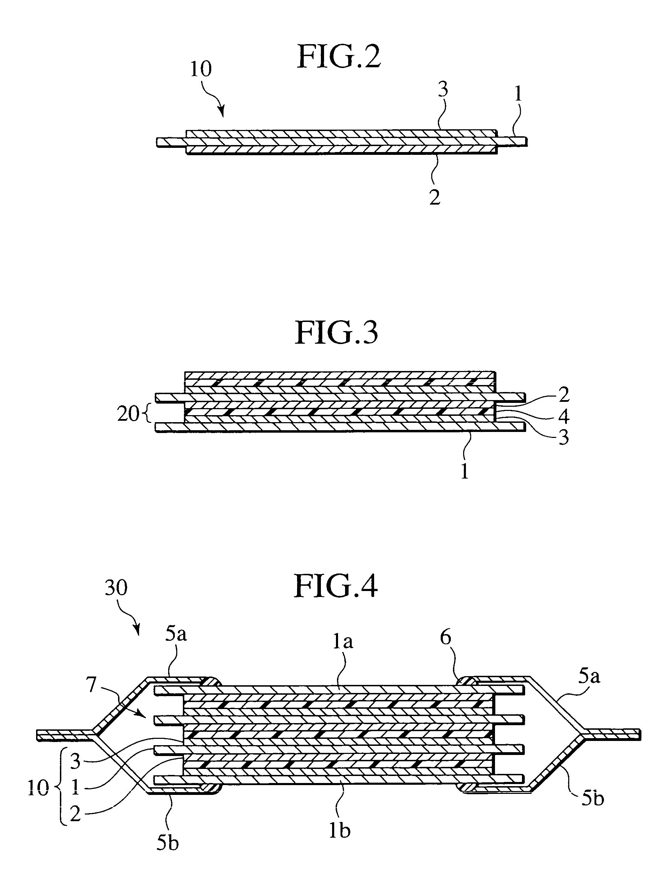

As shown in FIG. 2, a sheet bipolar electrode 10, which is a constituent of the bipolar battery, has a construction as follows. A positive electrode active material layer 2 is placed on one side of a collector 1, and a negative electrode active material layer 3 is placed on the other side of the same. In other words, the bipolar electrode 10 has a construction in which the positive electrode active material layer 2, the collector 1 and the negative electrode active material layer 3 are stacked in this order.

As shown in FIG. 3, the electrodes 10 having the above-mentioned construction are placed so that all electrodes have this consistent stacking order, and are stacked while sandwiching an electrolyte layer 4 therebetween, thus forming the electrode stacked body 7. Filling the electrolyte layer 4 between the positive and negative electrode active material layers 2 and 3 realizes smooth ion conduction, achieving power improvement of the whole cell.

Since a solid electrolyte is used for this electrolyte layer 4, electrolyte leakage will not occur, and a construction for preventing the leakage is thus no longer required. Therefore, it is possible to simplify the bipolar battery construction. In the case of using a liquid or semisolid gel material for the electrolyte layer 4, sealing is required between the coll ectors 1 in order to prevent the electrolyte leakage.

Incidentally, a layer formed by laminating the negative electrode active material layer 3, the electrolyte layer 4 and the positive electrode active material layer 2, which are sandwiched between the collectors 1, is called a single cell layer 20.

Next, the entire construction of the bipolar battery of the present invention will be described.

When the bipolar electrodes 10 and the electrolyte layers 4 are alternately stacked so as to be applied to the bipolar battery 30, the bipolar electrodes 10 are always stacked on outermost layers of the electrode stacked body 7 as shown in FIG. 4. In the bipolar electrodes 10 on the outermost layers, collectors 1a and 1b are placed so as to be in the outermost position. The collectors 1a and 1b later become terminals, which function as positive and negative electrodes, respectively. Hence, the collector 1a, functioning as the positive electrode, is stacked without the negative electrode active material layer 3 formed outside the collector 1a. The collector 1b, functioning as the negative electrode, is stacked without the positive electrode active material layer 2 formed outside the collector 1b.

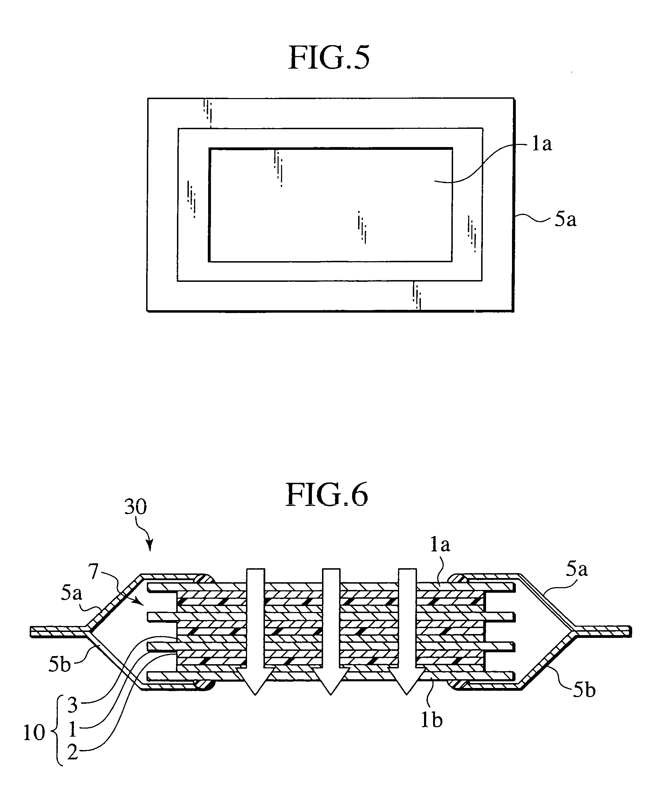

As shown in FIG. 5, the collector 1a is covered by a laminated sheet 5a in which an opening is formed in the center. Similarly, the collector 1b is covered by a laminated sheet 5b in which an opening is formed in the center. Thereafter, four sides of the laminated sheets 5a and 5b are sealed. Furthermore, edges of the openings in the laminated sheets 5a and 5b are attached to the collectors 1a and 1b, respectively, by the use of sealing resin 6. Consequently, the four sides of the bipolar electrodes 10 and the electrolyte layers 4 are hermetically sealed under reduced pressure. For the sealing resin 6, epoxy resin can be used.

As a result of the above, the collector 1a as the positive terminal and the collector 1b as the negative terminal are exposed outside the bipolar battery 30. These collectors 1a and 1b themselves function as the positive and negative terminals, respectively.

For the laminated sheets 5a and 5b, a polymer-metal composite film is generally used. This film is formed by laminating a thermal adhesive resin film, a metal foil and a resin film with rigidity in this order. When the metal foil of the laminated sheets 5a or 5b comes into direct contact with the collector 1a or 1b serving as the terminal, a short circuit is established between them. Therefore, the collectors 1a and 1b and the laminated sheets 5a and 5b are respectively joined by use of the sealing resin 6 so that they are not in contact with each other.

In the bipolar battery 30 having the aforementioned construction, a current flows from the collector 1a, which is the positive terminal, toward the collector 1b, which is the negative terminal as shown by arrows in FIG. 6. Specifically, the current flows in the stacking direction of the bipolar electrodes 10 . Accordingly, a current can be drawn outside the battery without changing the current flow direction.

As described herein above, in the bipolar battery 30 of the present invention, the collectors 1a and 1b themselves are exposed outside the battery in the stacking direction of the bipolar electrodes 10, thereby functioning as the positive and negative terminals, respectively. Therefore, there is no need to adopt a construction such as attaching a tab or the like to the collector 1 in order to draw a current outside the battery. It is thus possible to prevent a loss of currents due to resistance of the tab while the currents flow through the tab. In addition, since the collectors themselves work as the terminals, no tabs are required. Therefore, currents do not flow along the collector s toward the tabs, and thereby a distance which the current passes through becomes short. Hence, a loss of currents is reduced. Since no tabs are required, there is a high degree of design freedom when connecting a plurality of the stacked batteries in series and/or inparallel.

Further, because the electrolyte layer is made of a solid polymer, no electrolyte leakage occurs. Therefore, it is not required to seal the electrolyte by resin or the like in order to prevent the leakage, thus simplifying the construction of the bipolar battery 30.

The bipolar battery 30 of the present invention shown in FIG. 4 and the conventional bipolar battery 90 shown in FIG. 1 were prepared. All constituents of these two bipolar batteries were the same in terms of the electrode area, the number of stacked electrodes and the like, except for the construction of the terminals. An alternating voltage (amplitude) with a frequency of 1 kHz was applied between the positive and negative terminals of each battery, and resistance of the terminals was measured during the application. The resistance indicated in the bipolar battery 30 of the present invention was 3.1 mΩ, whereas that in the conventional bipolar battery 90 was 14.3 mΩ. These results revealed that resistance in the terminals is reduced in virtue of the present invention.

The construction of the bipolar battery 30 of the present invention hasbeen hitherto described. Next,description will be provided for reference regarding materials and the like of the collector 1, the positive electrode active material layer 2, the negative electrode active material layer 3, the electrolyte layer 4 and the laminated sheets 5a and 5b in the bipolar battery 30 of the present invention. However, these materials are not particularly limited to the below.

### (Collector)

Aluminum is used for the surface material of the collector. The use of aluminum for the surface material of the collector allows the active material layer formed on the collector to have a high mechanical strength, even when a solid polymer electrolyte is contained in the active material layer. The construction of the collector is not particularly limited as long as the surface material thereof is aluminum. The collector itself mayalsobemade of aluminum. Alternatively, the surface of the collector can be coated with aluminum, that is, the collector may be formed by coating aluminum on the surface of a material other than aluminum (such as copper, titanium, nickel, stainless steel or an alloy thereof). In some cases, two or more plates may be adhered together and used as the collector. From the viewpoints of corrosion resistance, manufacturability, cost efficiency and others, it is preferable to use a single aluminum foil as the collector. The thickness of the collector is not particularly limited, but it is usually within a range of 10 to 100 µm.

### (Positive Electrode Active Material Layer)

The positive electrode active material layer contains a positive electrode active material and a solid polymer electrolyte. Apart from these, the positive electrode active material layer may contain a supporting electrolyte (lithium salt) for enhancing ion conductivity, a conductive material for enhancing electronic conductivity, N-methyl-2-pyrrolidone (NMP) as a solvent for adjusting slurry viscosity, azobisisobutyronitrile (AIBN) as a polymerization initiator, and the like.

For the positive electrode active material, it is possible to use a composite oxide of lithium and transition metal, which can be used for a liquid lithium-ion battery. Specifically, an Li-Co based composite oxide such as LiCoO₂, an Li-Ni based composite oxide such as LiNiO₂, an Li-Mn based composite oxide such as spinel LiMn₂O₄, and an Li-Fe based composite oxide such as LiFeO₂ can be listed. In addition, a phosphate compound of transition metal and lithium such as LiFePO₄ or sulfate compound, a transition metal oxide or sulfide such as V₂O₅, MnO₂, TiS₂, MoS₂ and MoO₃, as well as PbO₂, AgO and NiOOH can be listed. By using lithium-transition metal composite oxide as the positive electrode active material, reactivity and cycle resistance of the stacked battery are improved, and thereby the cost is reduced.

It is preferable to use the positive electrode active material with a particle size smaller than that of a positive electrode active material generally used for a liquid lithium-ion battery, in order to reduce the electrode resistance of the bipolar battery. Specifically, the preferable mean particle size of the positive electrode active material is within a range of 0.1 to 5 µm.

The solidpolymer electrolyte is not particularly limited as long as it is a polymer having high ion conductivity. The polymer having high ion conductivity is polyethylene oxide (PEO), polypropylene oxide (PPO), a copolymer thereof or the like. This type of polyalkylene oxide-based polymer can adequately dissolve lithium salts such as LiBF₄, LiPF₆, LiN (SO₂CF₃)₂ and LiN(SO₂C₂F₅)₂, and achieve excellent mechanical strength as they are formed in cross-linking structures. In the present invention, the solid polymer electrolyte is contained in at least one of the positive and negative electrode active material layers. However, the solid polymer electrolyte is preferably contained in both of the positive and negative electrode active material layers in order to further improve the cell performance of the bipolar battery.

As the supporting electrolyte, LiN (SO₂CF₃)₂, LiBF₄, LiPF₆, LiN(SO₂C₂F₅)₂ or a mixture thereof can be used, but is not necessarily limited to them.

The conductive material can be acetylene black, carbon black, graphite or the like, but is not necessarily limited to them.

The compounding amounts of the positive electrode active material, the solid polymer electrolyte, the lithium salt and the conductive material in the positive electrode active material layer should be decided in consideration of the intended usage of the battery (prioritizing power or energy, for example) and ion conductivity. For example, if the compounding amount of the solid polymer electrolyte is too small in the active material layer, resistance of ion conductivity and ion diffusion becomes large within the active material layer, thus degrading the cell performance. On the other hand, an excessive compounding amount of the solid polymer electrolyte within the active material layer reduces the energy density of the cell. Therefore, the amount of the solid polymer electrolyte, which is adequate for the purpose, is decided in view of these factors.

Here, the case of manufacturing the bipolar battery described below will be specifically considered. In this bipolar battery, reactivity is prioritized by the use of a solid polymer electrolyte at a present level ( ion conductivity of 10⁻⁵ to 10⁻⁴ S/cm). In order to obtain the bipolar battery having such characteristics, electronic conductivity resistance is maintained relatively low between the active material particles by adding extra conductive material or reducing the bulk density of the active material. At the same time, voids are increased, and the solid polymer electrolyte is filled into these voids. With these processes, the ratio of the solid polymer electrolyte may be increased.

The thickness of the positive electrode active material layer is not particularly limited, but should be decided in consideration of the intended usage of the battery (prioritizing power or energy, for example) and ion conductivity, as mentioned with regard to the compounding amount. In general, the thickness of the positive electrode active material layer is approximately within a range of 5 to 500 µm.

### (Negative Electrode Active Material Layer)

The negative electrode active material layer contains a negative electrode active material and a solid polymer electrolyte. Apart from these, the negative electrode active material layer may contain a supporting electrolyte (lithium salt) for enhancing ion conductivity, a conductive material for enhancing electronic conductivity, N-methyl-2-pyrrolidone (NMP) as a solvent for adjusting slurry viscosity, azobisisobutyronitrile (AIBN) as a polymerization initiator, and the like. The content of the negative electrode active material layer is basically the same as that described in the section "Positive Electrode Active Material Layer" except for the kinds of the negative electrode active materials. Therefore, description is omitted herein.

A negative electrode active material used for a liquid lithium-ion battery can also be used as the negative electrode active material. However, since thesolid polymer electrolyte is used for the bipolar battery of the present invention, it is preferable to use carbon, metal oxide, or composite oxide of lithium and metal, considering reactivity in the solid polymer electrolyte. More preferably, the negative electrode active material is carbon, or a composite oxide of lithium and transition metal. Even more preferably, the transition metal is titanium. In short, it is even more preferable that the negative electrode active material is titanium oxide or a composite oxide of titanium and lithium.

By using carbon or a composite oxide of lithium and transition metal as the negative electrode active material, reactivity and cycle resistance of the stacked battery are improved, and thereby the cost is reduced.

### (Electrolyte Layer)

The layer is made of a polymer having ion conductivity, and the material thereof is not limited as long as it exhibits ion conductivity. Preferably, a solid electrolyte is used to prevent electrolyte leakage. The solid electrolyte is a solid polymer electrolyte such as polyethylene oxide (PEO), polypropylene oxide (PPO), or a copolymer thereof. A supporting electrolyte (lithium salt) is contained within the solid polymer electrolyte layer in order to ensure ion conductivity. The supporting electrolyte can be, but not limited to, LiBF₄, LiPF₆, LiN(SO₂CF₃)₂, LiN (SO₂C₂F₅)₂ or a mixture thereof. Polyalkylene oxide-based polymers such as PEO and PPO can adequately dissolve lithium salts such as LiBF₄, LiPF₆, LiN (SO₂CF₃)₂ and LiN (SO₂C₂F₅)₂, and achieves excellent mechanical strength as they are formed into cross-linking structures.

The solid polymer electrolyte can be contained in the solid polymer electrolyte layer, and the positive and negative electrode active material layers. The same solid polymer electrolyte can be used for all of these layers, and it is also possible to use different solid polymer electrolytes for each of the layers.

### (Laminated Sheet)

The laminated sheet is used as a packaging material of the battery. In general, a polymer-metal composite film formed by laminating a thermal adhesive resin film, a metal foil and a resin film with rigidity in this order is used.

For the thermal adhesive resin film, polyethylene (PE), an ionomer, ethylene-vinyl acetate (EVA) and the like can be used. The metal foil can be an Aluminum (A1) foil, a Nickel (Ni) foil, for example. The resin film with rigidity can be polyethylene terephthalate (PET) and nylon, for example. Specifically, the laminated sheet can be a PE/Al foil/PET layered film, a PE/Al foil/nylon layered film, an ionomer/Ni foil/PET layered film, an EVA/A1 foil/PET layered film, an ionomer/Al foil/PET layered film and the like. The thermal adhesive resin film acts as a sealing layer when encapsulating the battery element inside. The metal foil and the resin film with rigidity provide the packaging material with resistance to moisture, ventilation and chemicals. The laminated sheets can be securely and easily joined together by ultrasonic bonding and the like.

### (Second Embodiment)

A second embodiment of the present invention is an assembled battery constructed by serial connection of the plurality of bipolar batteries 30 described in the first embodiment. In this assembled battery, the bipolar batteries 30 are connected so as to connect a positive terminal surface functioning as the positive electrode of the bipolar battery 30 and a negative terminal surface functioning as the negative electrode of the bipolar battery 30.

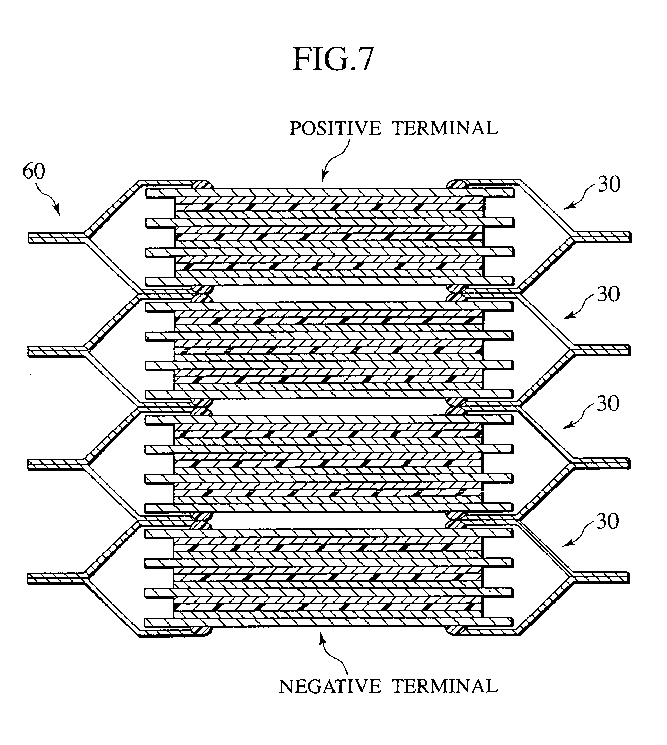

As shown in FIG. 7, the plurality of the bipolar batteries 30 described in the first embodiment is prepared, and the assembled battery 60 is formed by stacking the bipolar batteries 30. In this way, the assembled battery with high power can be obtained. Herein, the bipolar batteries 30 are stacked so that the positive terminal surface of one bipolar battery 30 and the neighboring negative terminal surface of another bipolar battery 30 are in contact with each other. In other words, the bipolar batteries 30 are stacked so that the stacking order of the single cell layers 20 (see FIG. 3) within each of the bipolar battery 30 is consistent.

As described above, the assembled battery 60 of the present invention is constructed by simply stacking the plurality of bipolar batteries 30. Therefore, the bipolar batteries are connected in series to form the assembled battery in a simple construction without requiring any special members.

The assembled battery 60 is formed by the plurality of bipolar batteries 30. Therefore, even when a defective bipolar battery 30 is found therein, the rest of the good batteries can be used by merely replacing the defective one, which is highly cost effective.

In the drawing, the terminals of the bipolar batteries 30 are illustrated as if they are spaced apart from each other. However, the terminals thereof are in contact with each other, since the actual laminated sheets are very thin, and the openings where the terminal surfaces are exposed are very large.

### (Third Embodiment)

A third embodiment of the present invention is an assembled battery constructed by parallel connection of the plurality of bipolar batteries 30 of the first embodiment. In this assembled battery, the bipolar batteries 30 are placed between two collecting plates, and a terminal functioning as the positive electrode of the stacked battery is connected to one of the collecting plates and a terminal functioning as the negative electrode of the same is connected to the other collecting plate.

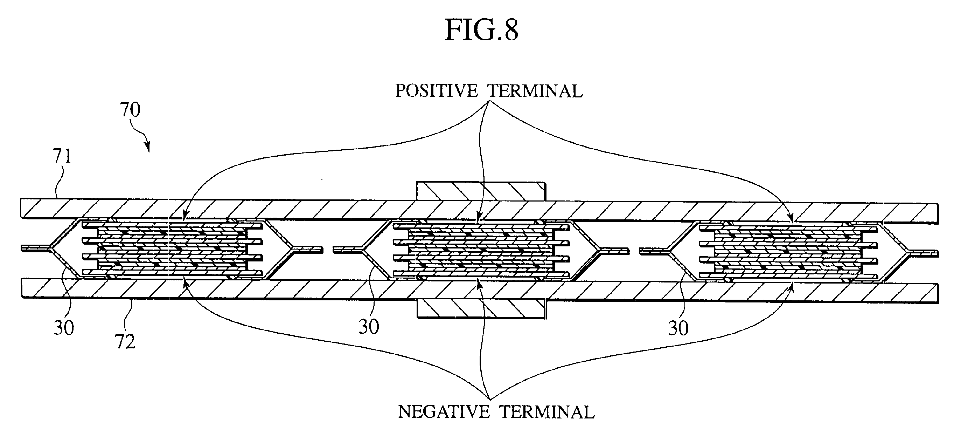

As shown in FIG. 8, the plurality of bipolar batteries 30 are prepared, and the assembled battery 70 is formed by connecting them in parallel by using two collecting plates 71 and 72. In this way, a long-life assembled battery can be obtained. Herein, the plurality of bipolar batteries 30 are placed between the collecting plates 71 and 72 so that the positive terminal surface of each bipolar battery 30 contacts with the collecting plate 71 (positive terminal plate), and the negative terminal surface of each bipolar battery 30 contacts with the collecting plate 72 (negative terminal plate).

As described herein above, the assembled battery 70 of the present invention can be formed by connecting the bipolar batteries 30 in parallel in a simple construction by use of the two collecting plates 71 and 72.

The assembled battery 70 is formed by the plurality of bipolar batteries 30. Therefore, even when a defective bipolar battery 30 is found therein, the rest of the good batteries can be used by merely replacing the defective one, which is highly cost effective.

In the drawing, the terminals of the bipolar batteries 30 are illustratedas if they are spaced apart from the collecting plates 71 and 72. However, the terminals and the collecting plates are in contact with each other, since the actual laminated sheets are very thin, and the openings where the terminal surfaces are exposed are very large.

### (Fourth Embodiment)

A fourth embodiment of the present invention is a vehicle mounting the bipolar battery 30 of the first embodiment, or the assembled battery 60 or 70 of the second or third embodiment as a power source for driving.

The bipolar battery 30 of the present invention has various characteristics as described earlier, and in particular, it is a compact battery. Therefore, the bipolar battery 30 is favorable for a power source of a vehicle, which is explicitly demanding with respect to energy and power densities. When a solid polymer electrolyte is used for the electrolyte layer, there is a disadvantage in that ion conductivity becomes lower compared with that of a gel electrolyte. Nevertheless, the surrounding environment of the bipolar battery can be maintained at a high temperature to some extent, when used in a vehicle. From this point of view, it can be said that the bipolar battery of the present invention is preferably used for a vehicle.

The entire content of a Japanese Patent Application No. P2002-297070 with a filing date of October 10, 2002 is herein incorporated by reference.

Although the invention has been described above by reference to certain embodiments of the invention, the invention is not limited to the embodiments described above will occur to these skilled in the art, in light of the teachings. The scope of the invention is defined with reference to the following claims.

## Claims

1. A stacked battery, comprising:
a sheet electrode (10) including a collector (1); and
an electrolyte layer (4) placed between the electrodes (10),
wherein an electrode stacked body ( 7 ) is formed by stacking the electrode (10) and the electrolyte layer (4), and
the electrodes (10) are placed on outermost layers of the electrode stacked body (7) in such a manner so that the collectors (1a, 1b) are exposed to the outside of the stacked battery (30) in the stacking direction of the electrode stacked body (7) and function as terminals.

2. A stacked battery according to claim 1,
wherein the electrode (10) is a bipolar electrode, in which a positive electrode active material layer (2) is formed on one surface of the collector (1) and a negative electrode active material layer (3) is formed on another surface of the collector (1), and
the stacked battery (30) is a bipolar lithium-ion secondary battery in which a plurality of the bipolar electrodes (10) are stacked in series sandwiching the electrolyte layer (4) therebetween.

3. A stacked battery according to claim 2,
wherein the positive electrode active material includes a composite oxide of lithium and transition metal, and the negative electrode active material includes any one of a carbon and the composite oxide of lithium and transition metal.

4. A stacked battery according to any of claims 1 through 3,
wherein the electrolyte layer (4) includes a solid polymer .

5. An assembled battery, comprising:
a stacked battery (30) having a sheet electrode (10) including a collector (1), and an electrolyte layer (4) placed between the electrodes (10),
wherein an electrode stacked body (7) is formed by stacking the electrode (10) and the electrolyte layer (4), and
the electrodes (10) are placed on outermost layers of the electrode stacked body (7) in such a manner so that the collectors (1a, 1b) are exposed to the outside of the stacked battery (30) in the stacking direction of the electrode stacked body (7) and function as terminals, and
the stacked battery (30) is connected in series.

6. An assembled battery, comprising:
a stacked battery (30) having a sheet electrode (10) including a collector (1); and
an electrolyte layer (4) placed between the electrodes (10),
wherein an electrode stacked body (7) is formed by stacking the electrode (10) and the electrolyte layer (4), and
the electrodes (10) are placed on outermost layers of the electrode stacked body (7) in such a manner so that the collectors (1a, 1b) are exposed to the outside of the stacked battery (30) in the stacking direction of the electrode stacked body (7) and function as terminals, and
a plurality of the stacked batteries (30) are connected in parallel so that the stacked batteries (30) are placed between two collecting plates (71, 72), and a terminal functioning as the positive electrode of the stacked battery (30) is connected to one of the collecting plates (71) and a terminal functioning as the negative electrode of the same is connected to the other collecting plate (72).

7. A vehicle, comprising:
a stacked battery (30) having a sheet electrode (10) including a collector (1) , and an electrolyte layer (4) placed between the electrodes (10),
wherein an electrode stacked body (7) is formed by stacking the electrode (10) and the electrolyte layer (4), and
the electrodes (10) are placed on outermost layers of the electrode stacked body ( 7) in such a manner so that the collectors (1a, 1b) are exposed to the outside of the stacked battery (30) in the stacking direction of the electrode stacked body (7) and function as terminals.
